Europäisches Patentamt

European Patent Office

Office européen des brevets

(19)

(11) Veröffentlichungsnummer: **0 178 426**
A1

(12) # EUROPÄISCHE PATENTANMELDUNG

(21) Anmeldenummer: **85110481.0**

(22) Anmeldetag: **21.08.85**

(51) Int. Cl.⁴: **B 01 J 35/06**
**B 01 D 53/36**

(30) Priorität: **13.10.84 DE 3437641**

(43) Veröffentlichungstag der Anmeldung:
**23.04.86 Patentblatt 86/17**

(84) Benannte Vertragsstaaten:
**DE FR GB IT SE**

(71) Anmelder: **Kanthal GmbH**
**Aschaffenburger Strasse 7**
**D-6082 Mörfelden-Walldorf(DE)**

(72) Erfinder: **Saris, Leo**
**Thomas-Mann-Strasse 7**
**D-6085 Nauheim(DE)**

(72) Erfinder: **Klöck, Hubert, Dipl.-Ing.**
**Genfer Strasse 6**
**D-6081 Stockstadt(DE)**

(74) Vertreter: **Gudel, Diether, Dr. et al,**
**Patentanwälte Dr. V. Schmied-Kowarzik Dipl.-Ing. G.**
**Dannenberg Dr. P. Weinhold Dr. D. Gudel Dipl.-Ing. S.**
**Schubert Dr. P. Barz Grosse Eschenheimer Strasse 39**
**D-6000 Frankfurt am Main 1(DE)**

(54) **Abgas-Katalysator.**

(57) Beschrieben wird ein Abgas-Katalysator mit einem Träger für Katalysematerial, der aus in Wirrlage angeordneten keramischen Fasern besteht, die zwischen sich die Strömungswege für das zu reinigende Abgas ausbilden. Der Abgas-Katalysator zeichnet sich insbesondere durch ein geringes Gewicht, geringe Abmessungen und einen geringen Wärmeinhalt aus.

Fig. 1

EP 0 178 426 A1

1

Beschreibung
_____

Die Erfindung betrifft einen Katalysator, insbesondere Abgas-Katalysator, mit einem Träger aus in Wirrlage angeordneten keramischen Fasern, die mit einem Katalysematerial, vorzugsweise enthaltend Platin, Palladium und/oder Rhodium, beschichtet sind.

Abgas-Katalysatoren reinigen die von einem Verbrennungsmotor kommenden Abgase, die als giftige Bestandteile insbesondere CO, CH und $NO_x$ enthalten. Das Katalysematerial wandelt diese schädlichen Bestandteile in $CO_2$, $H_2O$ bzw. $N_2$ um. Als Katalysematerialien kommen insbesondere Platin, Palladium und/oder Rhodium in Betracht.

Die Träger herkömmlicher Abgas-Katalysatoren bestehen entweder aus Keramik oder auch aus einem entsprechend profilierten Stahlband geeigneter Legierung. Beiden bekannten Typen von Abgas-Katalysatoren ist aber der Nachteil gemeinsam, daß sie verhältnismäßig voluminös und schwer sind. Auch haben sie einen verhältnismäßig großen Wärmeinhalt, so daß der Abgas-Katalysator erst nach einer bestimmten Fahrzeit wirksam entgiftet, nämlich wenn er seine Betriebstemperatur erreicht hat.

Bei Abgas-Katalysatoren mit Trägern aus Keramik geht man üblicherweise von einem geeignet geformten Keramikblock aus, in den dann die Strömungswege angelegt werden, die anschließend mit dem Katalysematerial beschichtet werden. Üblich sind Strömungsdurchlässe in Form von mehr oder weniger gerade durchgehenden, länglichen Hohlräumen. Wie bereits erwähnt, muß dieser Abgas-Katalysator

verhältnismäßig groß sein, um die für die Reinigung notwendige Oberfläche für das Katalysematerial zu bieten. Seine Einbaumaße liegen daher bei einer Länge von etwa 150 mm und einem Durchmesser von 100 mm. Sein Gewicht beträgt etwa 5 kg. Nachteilig ist daher nicht nur der verhältnismäßig große Wärmeinhalt, sondern der keramische Träger muß wegen seiner geringen mechanischen Festigkeit vor dem Einbau mit einem gewebtem Metall-Schutzmantel ummantelt werden. Außerdem sind zusätzliche Einbauteile notwendig, wodurch auch seine Montage verteuert wird. Schließlich ist dieser bekannte Träger mechanisch nur beschränkt belastbar, und er ist wenig temperaturschockbeständig.

Der bereits erwähnte Abgas-Katalysator mit metallischem Träger ist zwar mechanisch höher belastbar und er hat einen geringeren Wärmeinhalt, aber seine Einbaumaße liegen immer noch bei etwa zwei Drittel der Einbaumaße des vorstehend diskutierten Abgas-Katalysators mit Träger aus keramischen Material. Sein Gewicht liegt bei 1 kg, so daß sein Wärmeinhalt entsprechend verringert ist. Auch ist das Verhältnis Oberfläche zu Volumen verbessert. Es liegt bei etwa 4.000 $m^2/m^3$. Schließlich hat er einen geringeren Rückstau als der vorstehend diskutierte bekannte Abgas-Katalysator mit dem Träger aus Keramik. Trotz dieser grundsätzlichen Vorteile ist dieser bekannte Abgas-Katalysator immer noch recht voluminös und sein Wärmeinhalt ist so hoch, daß eine längere Zeit vergeht, bis er seine Betriebstemperatur erreicht hat.

Schließlich ist auch noch ein schwammartiger Träger für Katalysematerial bekannt, der aus einer Nickel-Chrom-Legierung besteht. Dieser Träger wird aber nicht zur Abgasentgiftung eingesetzt, sondern insbesondere zum Desodorieren. Offenbar ist dieses Material zum Reinigen der Abgase von Verbrennungsmotoren nicht ausreichend temperaturbeständig.

Die WO 83/01017 beschreibt einen Katalysator mit den eingangs genannten Merkmalen, der für gasbeheizte Lockenwickler eingesetzt wird. Dieser bekannte Katalysator verwendet als Grundmaterial in Wirrlage angeordnete Quarzfasern. Diese werden in einem ersten Verfahrensschritt mit kolloidal verteilten Aluminiumoxidteilchen beschichtet. In einem zweiten Verfahrensschritt wird das Aluminiumoxid zwecks Verbindung mit der Grundmatte erhitzt und getrocknet. Dadurch wird die spezifische Oberfläche der Matte fühlbar erhöht, während das Ausgangsmaterial eine geringe spezifische Oberfläche haben soll.

Die Beschichtung mit dem Aluminiumoxid ist außerdem für den nachfolgenden, dritten Verfahrensschritt, nämlich für die Beschichtung mit einem als Katalysator dienenden Edelmetall (Platin) notwendig. Die hier in Frage kommenden Katalysatoren haften nämlich nicht direkt an Quarzfasern.

Die Herstellung dieses bekannten Katalysators ist daher aufwendig, insbesondere wegen des ersten und zweiten Verfahrensschrittes. Auch erhöht die tröpfchenförmig aufgebrachte Beschichtung mit dem Aluminiumoxid den Durchgangswiderstand der Struktur unnötig. Dies ist möglicherweise für Lockenwickler tragbar, nicht aber für Abgas-Katalysatoren.

Die Erfindung vermeidet die geschilderten Nachteile. Ihr liegt, ausgehend von dem für Lockenwickler bekannten Katalysator der eingangs genannten Art, die Aufgabe zugrunde, diesen so auszugestalten, daß er als Abgas-Katalysator, insbesondere für Kraftfahrzeuge, eingesetzt werden kann, der sich insbesondere durch einen geringen Wärmeinhalt und geringe Abmessungen auszeichnet. Auch soll seine Herstellung vereinfacht werden.

Zur Lösung dieser Aufgabe ist der Katalysator dadurch gekennzeichnet, daß die keramischen Fasern einen Durchmesser von etwa 1 µm bis 10 µm haben und aus einer Vereinigung von $SiO_2$ und $Al_2O_3$ bestehen.

Erfindungsgemäß verwendet man somit für den Träger sehr dünne keramische Fasern in der Größenordnung von vorzugsweise einigen Mikrometern, die, in Wirrlage angeordnet zwischen sich gewissermaßen von Haus aus die Strömungswege für das zu reinigende Abgas ausbilden, ohne daß man die Strömungswege zwangsweise anlegen muß, wie bei dem eingangs geschilderten Abgas-Katalysator, der ebenfalls mit einem Träger aus keramischen Material arbeitet. Bedingt durch die dreidimensional-zufällige Lage und Anordnung der den Träger ausbildenden keramischen Fasern, verlaufen die Strömungswege nicht geradlinig, wie beim Stand der Technik, sondern in allerkürzesten Abständen umlenkend und vielfach gewunden. Dadurch wird die Chance für die Moleküle fühlbar verbessert, auf die Beschichtung der Träger aus dem Katalysematerial aufzutreffen, wodurch der Wirkungsgrad ebenfalls fühlbar verbessert wird. Versuche haben ergeben, daß dennoch eine nur geringfügige Drosselung der Strömung erfolgt.

Das erfindungsgemäß für den Träger verwendete Material ist temperaturbeständig bis weit über 1.000°C. Ein Abgas-Katalysator für herkömmliche Pkws wiegt etwa nur 10 g und hat daher einen entsprechend drastisch verringerten

5

Wärmeinhalt. Der erfindungsgemäße Abgas-Katalysator erreicht daher unmittelbar nach der Zündung des zugehörigen Verbrennungsmotors seine Betriebstemperatur. Sein spezifisches Oberflächen-Volumenverhältnis liegt bei etwa 80.000 $m^2/m^3$ und ist daher etwa 20 x größer als dieses Verhältnis bei dem heute schon als gut angesehenen Abgas-Katalysator mit metallischem Träger. Entsprechend gering sind seine Einbaumaße. Sie liegen beispielsweise bei einer Länge von 30 mm und einem Durchmesser von 50 mm.

Der erfindungsgemäße Abgas-Katalysator kann daher nach Art einer Pille direkt in das Abgasrohr von Kraftfahrzeugen oder auch von stationär angeordneten Verbrennungsmotoren eingesetzt werden. Die Kosten für seinen Einbau sind sehr gering, insbesondere weil praktisch keine Zubehörteile anfallen, die zusammengebaut werden müßten. Nicht nur die Einbaukosten des Katalysators sind drastisch reduziert, sondern auch sein Herstellungspreis, insbesondere bedingt durch die drastisch verringerte Masse für den Träger. Ggf. kann der erfindungsgemäße Abgas-Katalysator sogar in bestehende Kraftfahrzeuge bzw. Anlagen eingebaut werden, insbesondere weil er nach Art einer Pille nur geeignet in das Abgasrohr eingeschoben und dort befestigt werden muß. Dies kann ausreichend nahe am Ausgang des Verbrennungsmotors geschehen, weil das verwendete Material hochtemperaturbeständig ist.

Für dieses Material wird eine Legierung oder Vereinigung aus $SiO_2$ und $Al_2O_3$ verwendet, wobei der Anteil an $Al_2O_3$ um so höher gewählt wird, je höher die jeweilige maximale Betriebstemperatur ist. Eine anschließende Beschichtung der keramischen Fasern mit Aluminiumoxid entfällt, weil die Fasern selbst schon ausreichend Aluminiumoxid enthalten, um das Katalysematerial an ihrer Oberfläche haften zu lassen.

Nachdem $Al_2O_3$ teurer ist als $SiO_2$, verwendet man für die Legierung so viel $Al_2O_3$, wie für die gute Haftungswirkung und die jeweils entstehenden Temperaturen notwendig ist.

Hierbei wird unter dem Begriff der Legierung eine Vereinigung der Ausgangsmaterialien nach Art einer Legierung verstanden, wobei man als Ausgangsmaterialien aber die beiden erwähnten Metalloxide ($SiO_2$ und $Al_2O_3$) verwendet.

Für die praktische Ausführung des erfindungsgemäßen Abgas-Katalysators bzw. seines Trägers gibt es mehrere Möglichkeiten. Besonders bevorzugt wird eine Ausführungsform, bei der die keramischen Fasern unter Unterdruck zu einem Trägerkörper geformt sind. Je nachdem, wie man die Verfahrensparameter beim Formen dieses Körpers wählt, hat der Trägerkörper innerhalb eines recht weiten Bereichs ein bestimmtes spezifisches Gewicht und damit auch ein bestimmtes Verhältnis Oberfläche zu Volumen. Diese Ausführungsform bietet den Vorteil, daß der Körper gleich in der gewünschten Form, im allgemeinen eine Zylinderform geformt werden kann. Die Fasern sind im Körper fest gebunden, so daß der Körper praktisch nicht staubt. Seine Dichte ist in weiten Bereichen einfach einstellbar und die Oberflächen der den Körper ausbildenden keramischen Fasern können einfach mit dem Katalysematerial versehen werden.

Eine andere Ausführungsform ist dadurch gekennzeichnet, daß die keramischen Fasern durch Nadeln zu einer Matte miteinander verbunden sind. Dies ist eine sehr preisgünstige Herstellung eines derartigen Körpers, der dann allerdings noch in einem geeigneten Gehäuse untergebracht werden muß. Auch bei dieser Form kann man die Dichte des Körpers innerhalb weiter Grenzen einfach einstellen und der Körper ist auch hier einfach mit dem Katalysematerial zu versehen.

Zur Herstellung eines geeigneten Zylinderkörpers kann man die Matte spiralig zu einem Körper wickeln.

Eine andere Ausführungsform, die besonders preisgünstig ist, ist dadurch gekennzeichnet, daß die keramischen Fasern lose in ein Gefäß eingelegt sind. Auch hier ist die Dichte leicht einstellbar. Allerdings ist dieser Körper schwieriger zu beschichten und es besteht die Gefahr, daß die Fasern aus den Durchlässen des Gefäßes herausstäuben.

Bei allen Ausführungsformen können die Fasern durch Vorsinterung miteinander verbunden werden, wodurch der Körper eine zusätzliche Steifigkeit erhält.

Bei der Herstellung des Körpers durch die Nadelung und auch beim Einlegen der Fasern in ein Gefäß wird man üblicherweise kein Bindemittel verwenden. Ein solches Bindemittel kann aber mit Vorteil bei der zuerst erwähnten Ausführungsform eingesetzt werden, wobei die keramischen Fasern unter Vakuum zu dem Tragkörper geformt werden. Auch das Bindemittel wird naturgemäß anschließend mit dem Katalysmaterial versehen. Diese Beschichtung wird man aus Kostengründen so dünn wie möglich wählen, üblicherweise in der Größenordnung von einem bis wenigen Mikrometern.

Nachdem der erfindungsgemäße Träger sich insbesondere durch sehr geringe Abmessungen auszeichnet, wird es bevorzugt, wenn der Träger in einem zylindrischen Gehäuse mit einem Sieb an der Einlaßseite und einem Sieb an der Auslaßseite angeordnet wird, wobei eines der Siebe mit einem Befestigungsflansch versehen ist. Die Abmessungen des Zylinderkörpers wird man so wählen, daß dieser passend in ein Abgasrohr eingeschoben werden kann. Mit Hilfe des Befestigungsflansches wird dann der Abgas-Katalysator im Rohr befestigt. Dies wird weiter unten noch näher erläutert.

Die Erfindung wird im folgenden anhand von Ausführungsbeispielen näher erläutert, aus denen sich weitere wichtige Merkmale ergeben. Es zeigt:

Fig. 1 - einen Längsschnitt durch ein Abgasrohr eines Kraftfahrzeugs, in das ein erfindungsgemäßer Abgas-Katalysator eingesetzt ist;

Fig. 2 - eine Ansicht des Abgas-Katalysators nach Fig. 1 von links her gesehen;

Fig. 3 - eine Ansicht dieses Abgas-Katalysators von rechts her gesehen;

Fig. 4 - perspektivisch den eigentlichen mit Katalysematerial beschichteten Träger dieses Abgas-Katalysators;

Fig. 5 - eine abgewandelte Ausführungsform, bei der die Fasern lose in ein Gefäß eingepreßt sind;

Fig. 6 - schematisch in einer Seitenansicht eine genadelte Matte, hergestellt aus den erwähnten keramischen Fasern;

Fig. 7 - ebenfalls schematisch einen aus der Matte nach Fig. 6 spiralig gewickelten, zylindrischen Körper;

Fig. 8 - stark vergrößert und ebenfalls schematisch die in Wirrlage angeordneten keramischen Fasern, ohne Bindemittel;

Fig. 9 - eine schematische Darstellung entsprechend Fig. 8 mit zusätzlich angedeutetem Bindemittel;

Fig. 10 - eine Ansicht entsprechend Fig. 8 oder 9, wobei die in Wirrlage angeordneten keramischen Fasern durch Vorsintern an ihren Berührungspunkten miteinander verbunden sind.

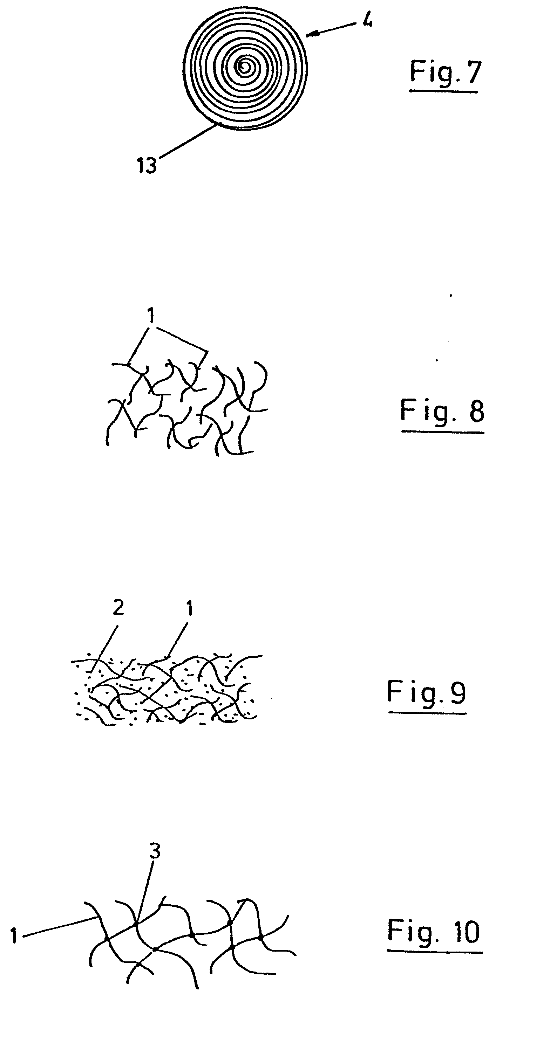

Fig. 8 zeigt keramische Fasern 1, die in Wirrlage angeordnet sind. Ihre Länge ist in weiten Grenzen beliebig. Ihre Dicke liegt bei etwa 3 Mikrometern.

Nach Fig. 9 sind die Fasern 1 mit einem bei Pos. 2 angedeuteten Bindemittel miteinander verbunden.

Fig. 10 erläutert die Verbindung der Fasern 1 an ihren Berührungspunkten 3, wo sie durch Vorsintern der Fasern miteinander verbunden sind.

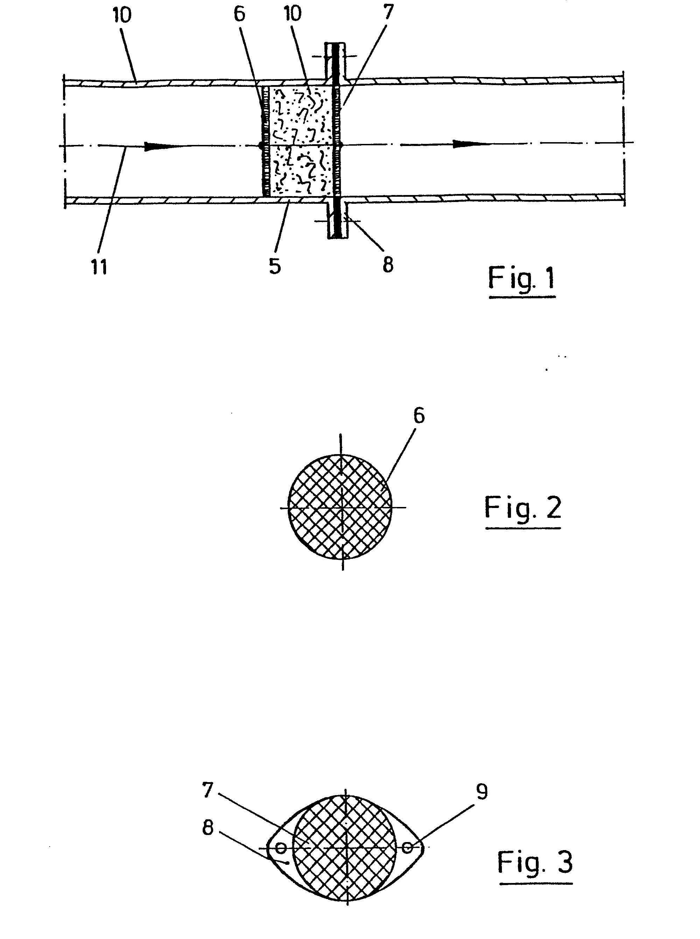

Nach dieser grundsätzlichen Erläuterung des Aufbaus des erfindungsgemäßen Trägers sei der Aufbau eines erfindungsgemäßen Abgas-Katalysators anhand der Fig. 1 bis 4 weiter erläutert.

Diese Figuren zeigen einen Träger 4, der aus beschichteten keramischen Fasern, beispielsweise nach Fig. 8 bis 10 besteht, die mit geeignetem Katalysematerial beschichtet sind. Der Träger hat zylindrische Form und ist in ein entsprechend geformtes Gehäuse mit einem Mantel 5, einem Einlaß 6 und einem Auslaß 7 eingesetzt. Die Figuren 1 und 3 zeigen, daß das Auslaßsieb 7 zu einem Ringflansch 8 mit Befestigungslöchern 9 verbreitert ist. Damit kann der Abgas-Katalysator in ein herkömmliches Abgasrohr 10 eingesetzt werden, das in Pfeilrichtung 11 von den Abgasen eines Verbrennungsmotors, vorzugsweise Otto-Motor, durchströmt wird.

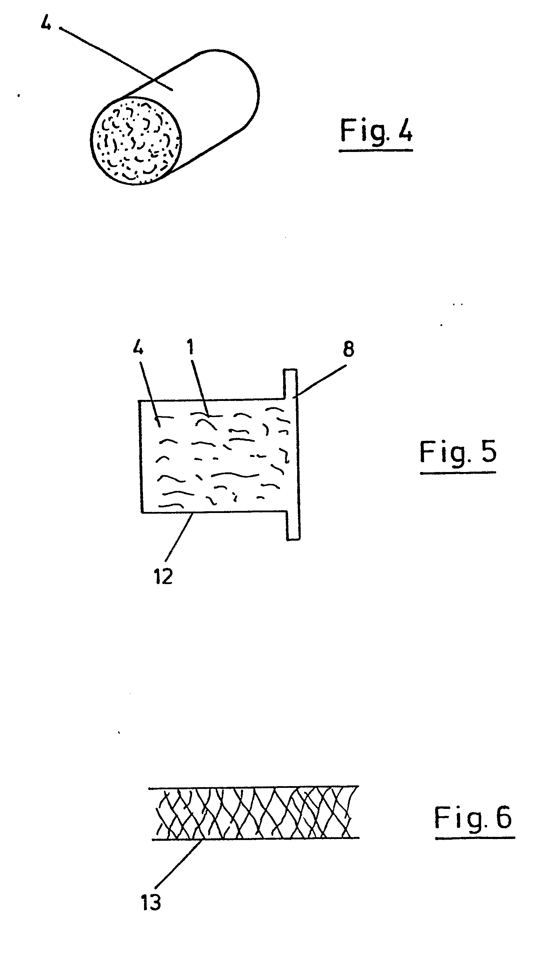

Nach Fig. 5 können die Fasern 1 auch lose in ein zylindrisches Gefäß 12 mit Einlaßsieb und Auslaßsieb sowie Befestigungsflansch 8 eingepreßt werden.

Nach Fig. 6 kann der Körper 4 auch dadurch hergestellt werden, daß die Fasern zu einer Matte 13 genadelt werden, und zwar ohne Verwendung eines Bindemittels. Fig. 7 zeigt, daß die Matte 13 dann spiralig zu einem zylindrischen Körper 4 gewickelt werden kann, der dann ebenfalls in ein geeignetes Gefäß 12 eingesetzt wird.

Berechnungen haben gezeigt, daß bei Verwendung von Fasern mit einem Durchmesser von drei Mikrometern ein Körper mit einem Volumen von 0,0588 dm$^3$, entsprechend einem Gewicht von 0,01176 kg, eine ausreichende innere Oberfläche zum Reinigen der Abgase eines handelsüblichen Pkws hat. Bei diesem Beispiel hat der Körper 4 in Zylinderform dann einen Durchmesser von etwa 50 mm bei einer Länge von etwa 30 mm.

Patentansprüche

1. Katalysator, insbesondere Abgas-Katalysator, mit einem Träger aus in Wirrlage angeordneten keramischen Fasern, die mit einem Katalysematerial, vorzugsweise enthaltend Platin, Palladium und/oder Rhodium, beschichtet sind, d a d u r c h   g e k e n n z e i c h n e t , daß die keramischen Fasern (1) einen Durchmesser von etwa 1 µm bis 10 µm haben und aus einer Vereinigung von $SiO_2$ und $Al_2O_3$ bestehen.

2. Katalysator nach Anspruch 1, d a d u r c h   g e k e n n z e i c h n e t , daß die keramischen Fasern (1) unter Unterdruck zu einem Trägerkörper (4) geformt sind.

3. Katalysator nach Anspruch 1, d a d u r c h   g e k e n n z e i c h n e t , daß die keramischen Fasern (1) durch Nadeln zu einer Matte (13) untereinander verbunden sind.

4. Katalysator nach Anspruch 3, d a d u r c h   g e k e n n z e i c h n e t , daß die Matte (13) spiralig zu einem Körper (4) gewickelt ist.

5. Katalysator nach Anspruch 1, d a d u r c h   g e k e n n z e i c h n e t , daß die keramischen Fasern (1) lose in ein Gefäß (12) eingepreßt sind.

6. Katalysator nach Anspruch 2,
   d a d u r c h   g e k e n n z e i c h n e t ,
   daß die keramischen Fasern (1) mit einem Bindemittel (2)
   miteinander verbunden sind.

7. Katalysator nach einem der Ansprüche 1 bis 6,
   d a d u r c h   g e k e n n z e i c h n e t ,
   daß die keramischen Fasern (1) durch Vorsintern miteinander
   verbunden sind.

8. Katalysator nach einem der Ansprüche 1 - 7,
   d a d u r c h   g e k e n n z e i c h n e t ,
   daß der Träger (4) in einem zylindrischen Gehäuse (5, 6, 7)
   mit einem Sieb (6) an der Einlaßseite und einem Sieb (7)
   an der Auslaßseite angeordnet ist, wobei eines der Siebe
   (6, 7) mit einem Befestigungsflansch (8) versehen ist.

9. Träger für einen Katalysator, ausgebildet nach einem der
   Patentansprüche 1 - 8.

10. Verfahren zur Herstellung eines Trägers nach Patentanspruch
    9, wobei man in Wirrlage angeordnete keramische Fasern mit
    einem Katalysematerial beschichtet,
    d a d u r c h   g e k e n n z e i c h n e t ,
    daß man keramische Fasern, die aus einer Vereinigung von
    $SiO_2$ und $Al_2O_3$ bestehen, und die einen Durchmesser von etwa
    1 μm bis 10 μm haben, mit dem Katalysematerial beschichtet.

Der Patentanwalt:

Dr. D. Gudel

0178426

Fig. 1

Fig. 2

Fig. 3

Kanthal

Fig. 4

Fig. 5

Fig. 6

13

0178426

Fig. 7

Fig. 8

Fig. 9

Fig. 10

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | DE-A-2 452 894 (IMPERIAL CHEMICAL INDUSTRIES LTD.) * Ansprüche 1-3,7,12,16-18; Seite 9, Zeile 28 - Seite 10, Zeile 14 * | 1,3,6, 9,10 | B 01 J 35/06 B 01 D 53/36 |
| | --- | | |
| X | DE-A-1 942 599 (SOCIETE GENERALE DE PRODUITS REFRACTAIRES) * Ansprüche 1,4,6, Beispiel 1 * | 1,5,8-10 | |
| | --- | | |
| A | DE-A-2 409 972 (IMPERIAL CHEMICAL INDUSTRIES LTD.) * Ansprüche 1-6,8-10; Seite 2, Zeilen 22-27 * | 1-3,5, 6 | |
| | --- | | |
| A | DE-A-2 501 241 (IMPERIAL CHEMICAL INDUSTRIES LTD.) * Ansprüche 1-5,10,11,13; Seite 2, Zeilen 26-31 * | 1,3,4, 10 | RECHERCHIERTE SACHGEBIETE (Int Cl 4) |
| | --- | | B 01 D 53/00 |
| A | FR-A-2 467 629 (JOHNSON, MATTHEY & CO. LTD.) * Ansprüche 1,7,8,11,12; Figur 3; Seite 2, Zeile 39 - Seite 3, Zeile 4 * | 1,5,7, 8 | B 01 J 35/00 F 01 N 3/00 |
| | ----- | | |

Der vorliegende Recherchenbericht wurde für alle Patentansprüche erstellt.

| Recherchenort BERLIN | Abschlußdatum der Recherche 19-12-1985 | Prüfer BERTRAM H E H |
|---|---|---|